(19) Europäisches Patentamt / European Patent Office / Office européen des brevets

(11) **EP 3 266 077 B1**

(12) # EUROPÄISCHE PATENTSCHRIFT

(45) Veröffentlichungstag und Bekanntmachung des Hinweises auf die Patenterteilung:
**10.05.2023 Patentblatt 2023/19**

(21) Anmeldenummer: **16712222.5**

(22) Anmeldetag: **02.03.2016**

(51) Internationale Patentklassifikation (IPC):
**H01S 3/00** (2006.01)   **H01S 3/13** (2006.01)
**G02F 1/11** (2006.01)

(52) Gemeinsame Patentklassifikation (CPC):
**H01S 3/0085; G02F 1/113; H01S 3/1307;**
**G02F 2203/54**

(86) Internationale Anmeldenummer:
**PCT/EP2016/054439**

(87) Internationale Veröffentlichungsnummer:
**WO 2016/139252 (09.09.2016 Gazette 2016/36)**

(54) **REDUKTION DER PULSREPETITIONSFREQUENZ EINES GEPULSTEN LASERSYSTEMS**

REDUCING THE PULSE REPETITION FREQUENCY OF A PULSED LASER SYSTEM

RÉDUCTION DE LA FRÉQUENCE DE RÉPÉTITION DES IMPULSIONS D'UN SYSTÈME DE LASER PULSÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2015 DE 102015102964**
**18.03.2015 DE 102015104084**

(43) Veröffentlichungstag der Anmeldung:
**10.01.2018 Patentblatt 2018/02**

(73) Patentinhaber: **Fraunhofer-Gesellschaft zur Förderung**
**der angewandten Forschung e.V.**
**80686 München (DE)**

(72) Erfinder:
- **DE VRIES, Oliver**
  **07745 Jena (DE)**
- **LIMPERT, Jens**
  **07751 Jena (DE)**
- **PLÖTNER, Marco**
  **07745 Jena (DE)**

(74) Vertreter: **Isfort, Olaf**
**Schneiders & Behrendt PartmbB**
**Rechts- und Patentanwälte**
**Huestraße 23**
**(Kortumkarree)**
**44787 Bochum (DE)**

(56) Entgegenhaltungen:
WO-A1-2013/185792

- **Angewandte Physik & Elektronik GmbH: "Pulse Management", , 23. November 2013 (2013-11-23), XP055277673, Gefunden im Internet: URL:www.ape-berlin.de/en/products/pulse-picker/pulseselect [gefunden am 2016-06-03]**
- **GATTASS R R ET AL: "Micromachining of bulk glass with bursts of femtosecond laser pulses at variable repetition rates", OPTICS EXPRESS, OSA (OPTICAL SOCIETY OF AMERICA), WASHINGTON DC, (US), Bd. 14, Nr. 12, 12. Juni 2006 (2006-06-12) , Seiten 5279-5284, XP009088207, ISSN: 1094-4087, DOI: 10.1364/OE.14.005279**
- **BASTIAN BORCHERS ET AL: "Acoustic frequency combs for carrier-envelope phase stabilization", OPTICS LETTERS, OPTICAL SOCIETY OF AMERICA, US, Bd. 39, Nr. 3, 23. Januar 2014 (2014-01-23), Seiten 544-547, XP001587128, ISSN: 0146-9592, DOI: 10.1364/OL.39.000544 [gefunden am 2014-01-23]**
- **OLIVER DE VRIES ET AL: "Acousto-optic pulse picking scheme with carrier-frequency-to-pulse-repetition-rate synchronization", OPTICS EXPRESS, Bd. 23, Nr. 15, 20. Juli 2015 (2015-07-20) , Seite 19586, XP055277483, DOI: 10.1364/OE.23.019586**

**Beschreibung**

Die Erfindung betrifft ein Verfahren zur Erzeugung eines Laserpulszuges, mit den Verfahrensschritten:

- Erzeugen des Laserpulszuges bei einer Pulsrepetitionsfrequenz, z.B. mittels eines Pulslasers;
- Einkoppeln des Laserpulszuges in einen akustooptischen Modulator und
- Auswahl einzelner Laserpulse des Laserpulszuges durch Ansteuern des akustooptischen Modulators mit Hochfrequenzpulsen, wobei die Hochfrequenzpulse durch Modulation eines hochfrequenten Trägersignals mit einem periodischen Schaltsignal erzeugt werden.

Außerdem betrifft die Erfindung ein System zur Erzeugung eines Laserpulszuges, mit einem Pulslaser, der den Laserpulszug bei einer Pulsrepetitionsfrequenz erzeugt, und einem akustooptischen Modulator, in dem die Laserpulse propagieren, und mit einer Steuereinrichtung, die den akustooptischen Modulator zur Auswahl einzelner Laserpulse mit Hochfrequenzpulsen ansteuert.

Viele gepulste Lasersysteme, vor allem modengekoppelte Laseroszillatoren, erzeugen einen Laserpulszug bei einer sehr hohen Pulsrepetitionsfrequenz (PRF). Damit ist die korrespondierende Pulsspitzenleistung bzw. Pulsenergie bei solchen Systemen eher gering. Um diese beiden Parameter zu erhöhen, ist es im Stand der Technik bekannt, die gepulste Laserstrahlung zu verstärken. Damit werden allerdings nicht nur die Pulsenergie und Pulsspitzenleistung erhöht, sondern auch die mittlere Leistung der Laserstrahlung. Optische Verstärkersysteme sind häufig eher durch die mittlere Leistung als durch die eigentlichen Pulsparameter limitiert. Üblich ist es daher, die PRF des verwendeten Laseroszillators zu reduzieren, bevor die Strahlung weiter verstärkt wird, damit die mittlere Leistung sinkt, jedoch Pulsenergie und Pulsspitzenleistung gleich bleiben. In einem komplexeren optischen System können damit eine PRF-Reduzierung und eine Verstärkung in mehreren Stufen erfolgen, d.h. die PRF wird jeweils an die Anforderungen des nachfolgenden optischen Verstärkers angepasst. Damit kann eine sehr hohe Pulsspitzenleistung und Pulsenergie bei geringerer PRF erreicht werden.

Zur Reduzierung der PRF werden im Stand der Technik Schaltelemente verwendet, die auch als "Pulse Picker" bezeichnet werden. Dabei werden einzelne Laserpulse aus dem Laserpulszug ausgewählt.

Die gängigen Pulse Picker für diese Applikation sind zum einen elektrooptische Schalter (Pockels-Zellen) und zum anderen akustooptische Schalter.

Pockels-Zellen nutzen den Pockels-Effekt, um durch Erzeugung eines elektrischen Feldes den Brechungsindex eines doppelbrechenden nichtlinearen Mediums zu verändern, wobei ein nachfolgender Polarisator die Lichtpulse blocken oder passieren lassen kann. Hierfür werden in der Praxis sehr hohe Spannungen (im kV-Bereich) benötigt, womit schnelles Schalten schwierig und durch erforderliche hochentwickelte Leistungselektronik aufwendig und kostenintensiv ist.

Einfacher in der Handhabung sind akustooptische Modulatoren (AOM), da diese geringere Spannungen zur Ansteuerung benötigen und damit auch höhere Schaltgeschwindigkeiten erreicht werden können. Bei AOMs wird als Schaltprinzip ausgenutzt, dass die Laserstrahlung an einer Brechzahlmodifikation (Bragg-Gitter) gebeugt wird, die durch hochfrequente Schallwellen über einen mit einem entsprechend hochfrequenten elektrischen Signal angesteuerten Piezokristall in einem optischen Kristall erzeugt werden. Durch hinreichend schnelles Ein- und Ausschalten des elektrischen Ansteuersignals können einzelne Laserpulse des Laserpulszuges in einer Beugungsordnung am Ausgang des AOMs ausgewählt werden.

Die Verwendung eines AOM als Pulse Picker zur Reduzierung der PRF hat zwei wesentliche Nachteile: Zum einen treten Amplitudenschwankungen der ausgewählten Laserpulse auf. Da die Lage des erzeugten Beugungsgitters im AOM-Kristall in Relation zum Strahlengang von Laserpuls zu Laserpuls variiert, wird jeder Laserpuls mit einer unterschiedlichen Beugungseffizienz herausgegriffen, was sich auf die Pulsspitzenleistung der ausgewählten Laserpulse auswirkt (Pulsamplitudenschwankungen) und zu einer Erhöhung des relativen Spitzenintensitätsrauschens (RIN) führt. Der Grad der Pulsamplitudenschwankungen hängt im Wesentlichen von der Fokusgröße des Laserstrahls im Kristall, also vom AOM-Design selbst ab. Bisher wird dieser negative Effekt in Kauf genommen, obwohl anschließende Applikationen mitunter sehr empfindlich auf Intensitätsschwankungen reagieren.

Ein weiterer Nachteil ist, dass das Konzept der PRF-Reduzierung mittels AOM für sogenannte CE-phasenstabile Laserpulszüge bisher nicht anwendbar ist. Unter einem CE-phasenstabilen Laserpulszug versteht man einen Laserpulszug, dessen Spektrum ein optischer Frequenzkamm mit definierter Offset-Frequenz (auch als CEO-Frequenz - "Carrier Envelope Offset" - bezeichnet) ist. Dabei unterscheidet sich die Trägereinhüllendenphase, d.h. die Phasendifferenz zwischen der Trägerwelle und der Intensitätseinhüllenden der Laserpulse von Laserpuls zu Laserpuls um einen über den gesamten Laserpulszug konstanten Phasendifferenzwert. Um einen hohen Kontrast zwischen ausgewählten und nicht ausgewählten Laserpulsen zu erzeugen, wird der Nutzstrahl der ausgewählten Laserpulse in einer Beugungsordnung des AOM abgegriffen. Damit unterliegt der gebeugte Nutzstrahl aber gleichzeitig einer optischen Frequenzverschiebung (Doppler-Verschiebung) über das gesamte Spektrum des Frequenzkamms. Dieses Konzept lässt sich daher bisher nicht auf CE-phasenstabile Lasersysteme anwenden, da entweder (a) eine neue oder (b) zu einer vorhanden CE-Offsetfrequenz eine unbestimmte Frequenzkomponente hinzukommt, was zur Aufhebung der CE-Phasenstabilität führt.

Vor diesem Hintergrund ist es wünschenswert, eine verbesserte Methode zur Auswahl einzelner Laserpulse aus einem Laserpulszug bereitzustellen. Das aus dem Stand der Technik bekannte Intensitätsrauschen soll reduziert werden.

Ausgehend von einem Verfahren der eingangs genannten Art gelingt dies mitunter dadurch, dass für die Frequenz $f_{HF}$ des Trägersignals der Hochfrequenzpulse gilt: $f_{HF} = n/p \cdot f_{PRF}$, wobei $n$ eine beliebige natürliche Zahl ist und $p$ das ganzzahlige Verhältnis zwischen der Pulsrepetitionsfrequenz und der Frequenz des Schaltsignals angibt, und wobei das Trägersignal phasenstabil an den Laserpulszug gekoppelt ist.

Ausgehend von einem System der eingangs genannten Art gelingt dies zudem mitunter dadurch, dass die Steuereinrichtung eingerichtet ist, die Hochfrequenzpulse durch Modulation eines hochfrequenten Trägersignals mit einem periodischen Schaltsignal zu erzeugen, wobei für die Frequenz $f_{HF}$ des Trägersignals der Hochfrequenzpulse gilt: $f_{HF} = n/p \cdot f_{PRF}$, im Weiteren als Synchronitätsbedingung bezeichnet, wobei $n$ eine beliebige natürliche Zahl ist und $p$ der "Pulse Picking" Faktor, d.h. das ganzzahlige Verhältnis zwischen der Pulsrepetitionsfrequenz und der Frequenz des Schaltsignals angibt, und wobei das Trägersignal phasenstabil an den Laserpulszug gekoppelt ist.

Die im Stand der Technik auftretenden Amplitudenschwankungen der ausgewählten Laserpulse hängen mit der Verwendung von sogenannten "Travelling Wave" AOMs zusammen, bei denen die akustischen Wellen, die das optische Beugungsgitter durch Brechzahlmodifikation erzeugen, durch den AOM-Kristall laufen. Damit variiert die Lage des Beugungsgitters in Relation zum Strahlengang von Laserpuls zu Laserpuls.

Die Hochfrequenzpulse werden durch Modulation des hochfrequenten Trägersignals mit einem Schaltsignal (z.B. Rechtecksignal) erzeugt. Gemäß der Erfindung wird die Trägerfrequenz der Hochfrequenzpulse, mit denen der AOM-Kristall zur Erzeugung der akustischen Wellen beaufschlagt wird, mit dem Schaltsignal durch die Erfüllung der oben genannte Synchronitätsbedingung in Verbindung gebracht wird. Dadurch wird erreicht, dass die Lage des Beugungsgitters in Bezug zum Strahlengang bei den aufeinanderfolgend den AOM-Kristall durchlaufenden Laserpulsen stets gleich ist. Damit wird jeder Laserpuls mit der im Wesentlichen gleichen Beugungseffizienz herausgegriffen. Die Pulsspitzenleistung ist dadurch bei jedem ausgewählten Laserpuls dieselbe und das relative Spitzenintensitätsrauschen wird signifikant reduziert.

In den meisten praktischen Fällen geht es darum, die PRF des Laserpulszuges gegenüber derjenigen des Pulslasers zu reduzieren. Dabei ist das Schaltsignal zweckmäßig ein periodisches Signal, wobei die PRF ein ganzzahliges Vielfaches der Frequenz des Schaltsignals ist. Die Pulsrepetitionsrate wird in diesem Fall um einen Faktor reduziert, der diesem ganzzahligen Vielfachen entspricht. Das Schaltsignal kann z.B. ein Rechtecksignal sein, wobei die Dauer jedes Rechteckpulses kürzer als der Pulsabstand zweier Laserpulse des Laserpulszuges sein sollte.

Ein Lasersystem mit einem derart angesteuerten akustooptischen Modulator ist beispielsweise aus der WO 2013/185792 A1 bekannt.

Vor diesem Hintergrund ist es Aufgabe der Erfindung, ein Verfahren sowie ein System bereitzustellen, das auch für CE-phasenstabile Laserpulszüge anwendbar ist, und zwar in dem Sinne, dass auch der aus den ausgewählten Laserpulsen bestehende Pulszug CE-phasenstabil ist. In diesem Falle ist das Spektrum des von dem Pulslaser erzeugten Laserpulszuges und des Pulszuges der erfindungsgemäß ausgewählten Laserpulse jeweils ein optischer Frequenzkamm mit definierter Offset-Frequenz.

Diese Aufgabe wird erfindungsgemäß durch das in Anspruch 1 definierte Verfahren sowie durch das in Anspruch 3 definierte System gelöst.

Hierzu werden erfindungsgemäß der Laserpulszug, das hochfrequente Trägersignals und das Schaltsignal synchronisiert. Die Synchronisierung von Schaltsignal und Laserpulszug entspricht dem Stand der Technik bei üblichen "Pulse Pickern". Dies bewirkt, dass z.B. jeder $p$-te ($n$ stehe für eine natürliche Zahl) Laserpuls des Laserpulszuges ausgewählt wird. Die Erfindung legt das Augenmerk auf die zusätzliche Synchronisierung zwischen Laserpulszug und Trägersignal der Hochfrequenzpulse. Das Trägersignal wird insgesamt phasenstabil an den Laserpulszug des Pulslasers gekoppelt. Die PRF des Pulslasers $f_{PRF}$ ist dabei z.B. ein ganzzahliges Vielfaches der PRF $f'_{PRF}$ des in der Pulsrate reduzierten Laserpulszuges. In diesem Falle gilt $f_{PRF} = p \cdot f'_{PRF}$ (p ist damit der "Puls Picking" Faktor). Um die Phasensynchronität von Laserpulszug, Schaltsignal und Trägersignal zu erhalten, kann erfindungsgemäß allgemein die Frequenz des Trägersignals ein rationales Vielfaches der PRF sein. Es gilt damit die Synchronitätsbedingung: $f_{HF} = n/p \cdot f_{PRF}$ (wobei $n$ eine natürliche Zahl sei).

In einem möglichen Sonderfall (n/$p$ ganzzahlig), der praktisch besonders leicht realisiert werden kann, ist die Frequenz des Trägersignals ein ganzzahliges Vielfaches der PRF des Pulslasers. Beträgt z.B. die PRF des Pulslasers 100 MHz, dann können für den AOM hochfrequente Trägersignale mit den Frequenzen 100, 200, 300 ... MHz usw. gewählt werden. Die Methode kann also umgesetzt werden, solange ein AOM zur Verfügung steht, der an diese Frequenzen angepasst ist. Steht z.B. ausschließlich ein 250 MHz-AOM zur Verfügung, kann mit $n$ = 5 und p = 2 gearbeitet werden, um die Trägerfrequenz $f_{HF}$ zu erzeugen.

Durch die beschriebene Synchronisation wird zum einen erreicht, dass sich das im AOM-Kristall erzeugte Beugungsgitter bei jedem ausgewählten Laserpuls, der den AOM-Kristall durchläuft, an derselben Position relativ zum Strahlengang der Laserstrahlung befindet. Unerwünschte Amplitudenschwankungen und damit verbundenes Intensitätsrauschen werden vermieden. Zum anderen bewirkt die beschriebene Synchronisation, dass auch Laserpulse aus einem CE-phasenstabilen Laserpulszug unter Erhalt der CE-Phasenstabilität ausgewählt werden können. Jeder CE-phasenstabile Laserpulszug besitzt eine definierte CE-Offsetfrequenz $f_{CEO}$, deren Betrag meist ein Bruchteil der PRF ist: $f_{CEO} = f_{PRF} / a$ (auch a sei eine natürliche Zahl). Der Frequenzkamm des ursprünglichen Laserpulszuges sei gegeben durch:

$$f_m = m \cdot f_{PRF} + f_{CEO}$$

(wiederum sei m eine natürliche Zahl)

Wenn erfindungsgemäß die Frequenz des Trägersignals am AOM gleich dem $n/p$-Fachen der PRF ist, dann erfährt der Frequenzkamm des Pulszuges der ausgewählten Laserpulse demgegenüber eine Frequenzverschiebung um das n/p-Fache der PRF. Das Spektrum des Frequenzkamms der ausgewählten Laserpulse nach dem AOM ist damit gegeben durch:

$$f'_{(m)} = (m \pm n) \cdot f_{PRF} / p + f_{CEO} = (m \pm n) \cdot f'_{PRF} + f_{CEO}$$

Wichtig ist dabei, dass sich bei der Reduktion der PRF (von $f_{PRF}$ auf $f'_{PRF}$) der Sprung der Trägereinhüllendenphase $\Delta\varphi'_{CEO}$ von ausgewähltem Laserpuls zu ausgewähltem Laserpuls nicht ändert. Es gilt:

$$\Delta\varphi'_{CEO} = 2\pi \cdot f_{CEO} / f'_{PRF} \quad (\text{modulo } 2\pi)$$

Für den Fall, dass die ursprüngliche $f_{CEO} = f_{PRF} / a$ beträgt, ergibt sich:

$$\Delta\varphi'_{CEO} = 2\pi \cdot p / a \quad (\text{modulo } 2\pi)$$

Bei geeigneter Wahl des Verhältnisses p/a kann damit sichergestellt werden, dass der Sprung der Trägereinhüllendenphase 0 bzw. $2\pi$ beträgt. Dieser Fall ist erfindungsgemäß immer dann erfüllt, wenn p/a gleich einer natürlichen Zahl ist. Die Frequenzverschiebung durch den AOM hat demnach keine Auswirkungen auf die CE-Phasenstabilität des Pulszuges der ausgewählten Laserpulse.

Bei einer bevorzugten Ausgestaltung des erfindungsgemäßen Systems erzeugt die Steuereinrichtung nicht nur das Schaltsignal zur Ansteuerung eines zur Modulation des Trägersignals vorgesehenen Modulators (Mischers). Zusätzlich steuert sie einen Hochfrequenz-Synthesizer an, der das Trägersignal erzeugt. Leistungsstarke digital ansteuerbare Hochfrequenz-Synthesizer sind als kommerzielle Komponenten für den erfindungsgemäßen Einsatz verfügbar. Diese erlauben, das erzeugte Hochfrequenzsignal nach Frequenz und Phase variabel zu steuern. Erfindungsgemäß kann dies mit Vorteil genutzt werden, indem die Steuereinrichtung die Phase und die Frequenz des von dem Hochfrequenz-Synthesizer erzeugten Trägersignals steuert. Durch die Steuerung der Phase des Trägersignals der Hochfrequenzpulse mittels des Synthesizers kann gezielt das Beugungseffizienzmaximum des AOM stabil angefahren werden. Intensitätsschwankungen der Laserpulse kommen, wie oben erläutert, durch Variation der Beugungseffizienz von Laserpuls zu Laserpuls zustande. Diese Schwankung wird durch die erfindungsgemäße Vorgehensweise neutralisiert. Die absolute Phasenlage bestimmt dabei die exakte Beugungseffizienz. Durch die Steuerung der Phase mittels des Synthesizers kann die (erfindungsgemäß stabilisierte) Beugungseffizienz z.B. zusätzlich noch gezielt an das Maximum herangefahren werden. Dadurch steigt die Gesamteffizienz des Puls-Picking Verfahrens. Herkömmlich bleibt diese hinter dem Maximum, das der jeweilige AOM an sich ermöglichen würde, zurück.

Ausführungsbeispiele der Erfindung werden im Folgenden anhand der Zeichnungen näher erläutert. Es zeigen:

Figur 1     eine schematische Ansicht eines erfindungsgemäßen Lasersystems als Blockdiagramm;
Figur 2     Illustration der Auswahl von Laserpulsen aus einem Pulszug gemäß dem Stand der Technik;
Figur 3     Illustration eines Ausführungsbeispiels des erfindungsgemäßen Verfahrens.

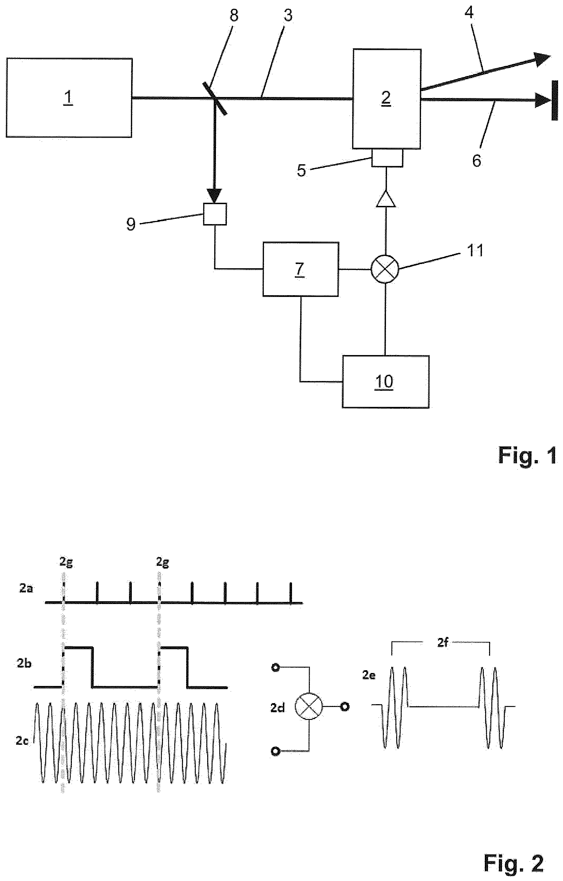

Die Figur 1 illustriert ein erfindungsgemäßes Lasersystem. Dieses weist einen Pulslaser 1 auf, der eine Abfolge von kurzen Laserpulsen emittiert. Bei dem Pulslaser 1 handelt es sich um einen CE-phasenstabilen Laser experimenteller oder kommerziell verfügbarer Bauart. Zur Reduktion der PRF ist ein Travelling-Wave-AOM 2 vorgesehen. Der von dem Pulslaser 1 emittierte Laserstrahl 3 wird in den akustooptischen Modulator 2 eingekoppelt. In dem akustooptischen Modulator 2 erfolgt eine Auswahl einzelner Laserpulse des Laserpulszuges in einer Beugungsordnung 4. Hierzu wird der AOM 2 mit Hochfrequenzpulsen beaufschlagt. Die Hochfrequenzpulse erzeugen mittels eines Piezo-Aktors 5 in dem Kristall des AOMs propagierende akustische Wellen. Das Wellenmuster erzeugt durch Brechzahlmodifikation ein optisches Beugungsgitter in dem Kristall des AOMs, an dem der Laserstrahl während der Dauer des jeweiligen Hochfrequenzpulses gebeugt wird. Außerhalb der Hochfrequenzpulse passiert der Laserstrahl den akustooptischen Modulator ohne Beugung. Der ungebeugte Laserstrahl 6 wird blockiert. Das dargestellte System umfasst des Weiteren eine Steuereinrichtung 7. Über einen Strahlteiler 8 wird ein Teil der von dem Pulslaser 1 emittierten Strahlung auf einen Fotodetektor 9 gelenkt. Dieser erzeugt ein elektrisches Signal, dessen Frequenz gleich der PRF des von dem Pulslaser 1 erzeugten Laserpulszuges ist. Die Steuereinrichtung 7 steuert ihrerseits einen Hochfrequenz-Synthesizer 10 an. Das Ausgangssignal des Hochfrequenz-Synthesizers 10 ist das Trägersignal der Hochfrequenzpulse, mit denen der Piezo-Aktor 5 des AOMs 2 angesteuert wird. Weiterhin erzeugt die Steuereinrichtung 7 ein Schaltsignal, mit dem über einen Modulator (Mischer) 11 das hochfrequente Trägersignal moduliert wird. Die Steuereinrichtung 7 synchronisiert das Schaltsignal und das Trägersignal mit der PRF, wie oben beschrieben. Hierbei steuert die Steuereinrichtung 7 den Synthesizer 10 z.B. in der Weise an, dass das von dem Synthesizer 10 erzeugte Trägersignal phasenstabil an den Laserpulszug des Pulslasers 1 gekoppelt ist. Die Frequenz des Trägersignals gibt die Steuereinrichtung 7 dabei z.B. so vor, dass sie ein n/p-Vielfaches der PRF ist.

Die Figur 2 illustriert die Ansteuerung des AOMs als "Pulse Picker", wie es aus dem Stand der Technik bekannt ist. 2a bezeichnet den zeitlichen Verlauf des Laserpulszuges mit einer Vielzahl von zeitlich äquidistant emittierten Laserpulsen. 2b bezeichnet das Schaltsignal. Bei dem dargestellten Beispiel soll die PRF auf 1/3 reduziert werden. Entsprechend ist die Frequenz des Schaltsignals gleich einem Drittel der PRF. Das Schaltsignal weist Rechteckpulse auf, deren Dauer kürzer ist als der Pulsabstand der Laserpulse. 2g gibt jeweils den "Trigger"-Zeitpunkt an, d.h. denjenigen Zeitpunkt, zu dem das Schaltsignal jeweils aktiviert wird. Mit 2c ist das hochfrequente Trägersignal bezeichnet, das zunächst nicht mit dem Lichtpulszug 2a oder mit dem Schaltsignal 2b synchronisiert ist. Mittels eines Mischers 2d wird das Trägersignal 2c mit dem Schaltsignal 2b moduliert. Das Ausgangssignal des Mischers ist mit 2e bezeichnet. Mit diesem Signal wird der Piezo-Aktor des AOMs zur Erzeugung des optischen Beugungsgitters angesteuert. Mit 2f sind jeweils die Hochfrequenzpulse zur Auswahl der Laserpulse bezeichnet. Wie in Figur 2 zu erkennen ist, hat das Trägersignal innerhalb der Hochfrequenzpulse 2f eine jeweils unterschiedliche Phasenlage. Da entsprechend das Beugungsgitter von Laserpuls zu Laserpuls unterschiedlich relativ zum Laserstrahl positioniert ist, ergeben sich Amplitudenschwankungen und Intensitätsrauschen, was unerwünscht ist.

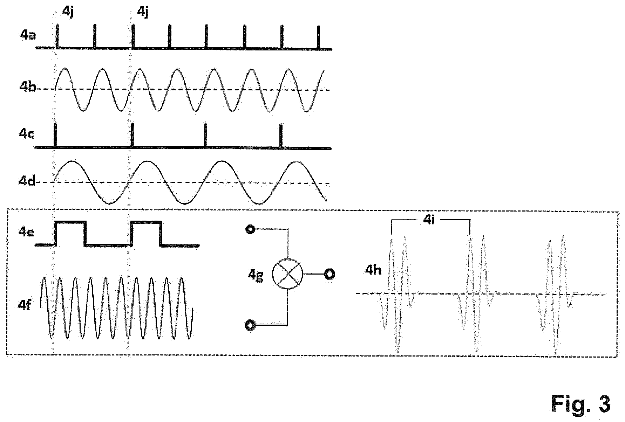

Die Figur 3 illustriert ein Ausführungsbeispiel des erfindungsgemäßen Verfahrens. Der Laserpulszug ist mit 4a bezeichnet. 4b stellt die Grundfrequenz des Laserpulszuges als sinusförmiges Signal dar. Bei 4c ist der gewünschte Laserpulszug mit reduzierter PRF gezeigt. Dieser wird erhalten durch Auswahl der Laserpulse jeweils zu den Zeitpunkten 4j. Bei dem dargestellten Ausführungsbeispiel wird somit die PRF gegenüber dem ursprünglichen Laserpulszug auf die Hälfte reduziert. 4d zeigt die Grundfrequenz des Laserpulszuges mit reduzierter PRF. Das zugehörige Schaltsignal ist mit 4e bezeichnet. Das Ansteuersignal 4h für den AOM wird per Mischer 4g aus einem Trägersignal 4f erhalten. Im Unterschied zu dem in Figur 2 gezeigten Fall ist bei dem in der Figur 3 illustrierten Ausführungsbeispiel das Trägersignal 4f mit dem Laserpulszug, bzw. der daraus abgeleiteten Grundfrequenz 4b, und mit dem Schaltsignal 4e synchronisiert. Das Schaltsignal 4e ist aus dem Lichtpulszug 4a, bzw. der Grundfrequenz 4b abgeleitet, indem die Frequenz des Schaltsignals 4e halb so groß ist wie die Frequenz des Laserpulszuges 4a. Die Frequenz des Trägersignals 4f ist bei dem dargestellten Ausführungsbeispiel ein rationales Vielfaches, nämlich hier das Dreifache der Frequenz des Laserpulszuges 4a. In dem durch Mischung des Schaltsignals 4e und des Trägersignals 4f erzeugten Treibersignal 4h des AOMs weisen die Hochfrequenzpulse 4i jeweils dieselbe Phasenlage relativ zum Schaltsignal 4e auf, so dass sichergestellt ist, dass die Beugungseffizienz des AOMs nicht schwankt und Intensitätsrauschen weitgehend unterbunden wird. Gleichzeitig sorgt, wie oben erläutert, die erfindungsgemäße Synchronisation von Lichtpulszug, Schaltsignal und Trägerfrequenz dafür, dass die Methode zur Reduktion der PRF bei einem CE-phasenstabilen Lichtpulszug, d.h. bei einem Lichtpulszug, dessen Spektrum ein optischer Frequenzkamm mit definierter Offset-Frequenz ist, möglich ist. Auch der in der PRF reduzierte Lichtpulszug 4c ist somit CE-phasenstabil.

Die erfindungsgemäße Methode kann bei allen gepulsten CE-phasenstabilen Lasersystemen angewendet werden, die in ihrer PRF reduziert werden sollen, vorausgesetzt dass für die entsprechende Wellenlänge ein Travelling-Wave-AOM existiert.

Die Erfindung stellt eine verbesserte Puls-zu-Puls Stabilität des Laserpulszuges bereit. Dies eröffnet Anwendungen in den Bereichen Mikro-Materialbearbeitung, Sensorik, Drucken und Beschriftung sowie medizinische und militärische Applikationen. Die erfindungsgemäße Verwendung CE-phasenstabiler Laser erschließt weitere Anwendungsgebiete, in denen Laser mit einer hohen Puls-zu-Puls-Kohärenz benötigt werden. Solche Anwendungen können sein: Cavity Enhancement in Stack-and-Dump-Systemen für z.B. die Erzeugung von höheren Harmonischen und inverse Compton-Streuung. Auch im Bereich der Attosekunden-Physik werden rauscharme CE-phasenstabile Lasersysteme benötigt. Im Hinblick auf zukünftige Entwicklungen, besonders im Bereich der laserbasierten Teilchenbeschleunigung, kann die Erfindung nützlich sein. Ein wesentlicher Vorteil für alle denkbaren Anwendungen ist, dass der erfindungsgemäße Ansatz sehr kostengünstig umgesetzt werden kann.

**Patentansprüche**

1. Verfahren zur Erzeugung eines Laserpulszuges, mit den Verfahrensschritten:

    - Erzeugen des Laserpulszuges (4a) bei einer Pulsrepetitionsfrequenz;
    - Einkoppeln des Laserpulszuges (4a) in einen akustooptischen Modulator und
    - Auswahl einzelner Laserpulse des Laserpulszuges (4a) durch Ansteuern des akustooptischen Modulators mit Hochfrequenzpulsen (4h), wobei die Hochfrequenzpulse (4h) durch Modulation eines hochfrequenten Trägersignals (4f) mit einem periodischen Schaltsignal (4e) erzeugt werden, wobei das Trägersignal (4f) phasenstabil an den Laserpulszug (4a) gekoppelt ist, und wobei für die Frequenz $f_{HF}$ des Trägersignals (4f) der Hochfrequenzpulse (4h) gilt: $f_{HF} = n/p \cdot f_{PRF}$, wobei n eine beliebige natürliche Zahl ist und p das ganzzahlige Verhältnis zwischen der Pulsrepetitionsfrequenz und der Frequenz des Schaltsignals (4e) angibt,

    **dadurch gekennzeichnet, dass**
    das Spektrum des Laserpulszuges (4a) ein optischer Frequenzkamm mit definierter Träger-Einhüllenden-Offset-Frequenz $f_{CEO}$ ist, für die gilt: $f_{CEO} = f_{PRF} / a$, wobei a eine natürliche Zahl ist und wobei das Verhältnis p / a ebenfalls eine natürliche Zahl ist.

2. Verfahren nach Anspruch 1, **dadurch gekennzeichnet, dass** die Frequenz des Trägersignals (4f) ein ganzzahliges Vielfaches der Pulsrepetitionsfrequenz ist.

3. System zur Erzeugung eines Laserpulszuges, mit einem Pulslaser (1), der den Laserpulszug bei einer Pulsrepetitionsfrequenz erzeugt, und einem akustooptischen Modulator (2), in dem die Laserpulse propagieren, und mit einer Steuereinrichtung (7), die den akustooptischen Modulator (2) zur Auswahl einzelner Laserpulse mit Hochfrequenzpulsen ansteuert, wobei die Steuereinrichtung (7) eingerichtet ist, die Hochfrequenzpulse (4h) durch Modulation eines hochfrequenten Trägersignals (4f) mit einem periodischen Schaltsignal (4e) zu erzeugen, wobei das Trägersignal (4f) phasenstabil an den Laserpulszug (4a) gekoppelt ist,

    und wobei für die Frequenz $f_{HF}$ des Trägersignals (4f) der Hochfrequenzpulse (4h) gilt: $f_{HF} = n/p \cdot f_{PRF}$, wobei n eine beliebige natürliche Zahl ist und p das ganzzahlige Verhältnis zwischen der Pulsrepetitionsfrequenz und der Frequenz des Schaltsignals (4e) angibt,
    **dadurch gekennzeichnet, dass**
    das Spektrum des Laserpulszuges (4a) ein optischer Frequenzkamm mit definierter Träger-Einhüllenden-Offset-Frequenz $f_{CEO}$ ist, für die gilt: $f_{CEO} = f_{PRF} / a$, wobei a eine natürliche Zahl ist und wobei das Verhältnis p / a ebenfalls eine natürliche Zahl ist.

4. System nach Anspruch 3, **dadurch gekennzeichnet, dass** die Steuereinrichtung (7) einen Hochfrequenz-Synthesizer (10) ansteuert, der das Trägersignal erzeugt.

5. System nach Anspruch 4, **dadurch gekennzeichnet, dass** die Steuereinrichtung (7) die Phase und die Frequenz des von dem Hochfrequenz-Synthesizer (10) erzeugten Trägersignals steuert.

6. System nach Anspruch 4 oder 5, **dadurch gekennzeichnet, dass** die Steuereinrichtung (7) außerdem ein Schaltsignal zur Ansteuerung eines zur Modulation des Trägersignals vorgesehenen Modulators (11) erzeugt.

**Claims**

1. Method for generating a laser pulse train, comprising the method steps:

    - generating the laser pulse train (4a) at a pulse repetition rate;
    - coupling the laser pulse train (4a) into an acousto-optical modulator, and
    - selection of individual laser pulses of the laser pulse train (4a) by driving the acousto-optical modulator with high-frequency pulses (4h), wherein the high-frequency pulses (4h) are generated by modulation of a high-frequency carrier signal (4f) with a periodic switching signal (4e), wherein the carrier signal (4f) is coupled to the laser pulse train (4a) in a phase-stable manner, and wherein for the frequency $f_{HF}$ of the carrier signal (4f) of the high-frequency pulses (4h) applies: $f_{HF} = n/p \cdot f_{PRF}$, wherein n is any natural number and p indicates the integer ratio between the pulse repetition frequency and the frequency of the switching signal (4e),

**characterized in that**
the spectrum of the laser pulse train (4a) is an optical frequency comb with a defined carrier-envelope-offset frequency $f_{CEO}$, for which applies:
$f_{CEO} = f_{PRF} / a$, wherein a is any natural number and wherein the ratio p I a likewise is a natural number.

2. Method according to claim 1, **characterized in that** the frequency of the carrier signal (4f) is an integer multiple of the pulse repetition frequency.

3. System for generating a laser pulse train, comprising a pulse laser (1), which generates the laser pulse train at a pulse repetition frequency, and an acousto-optical modulator (2), in which the laser pulses propagate, and comprising a control device (7) which controls the acousto-optical modulator (2) to select individual laser pulses with high-frequency pulses, wherein the control device (7) is configured to generate the high-frequency pulses (4h) by modulation of a high-frequency carrier signal (4f) with a periodic switching signal (4e), wherein the carrier signal (4f) is coupled to the laser pulse train (4) in a phase-stable manner, and wherein for the frequency $f_{HF}$ of the carrier signal (4f) of the high-frequency pulses (4h) applies:

$f_{HF} = n/p \cdot f_{PRF}$, wherein n is any natural number and p indicates the integer ratio between the pulse repetition frequency and the frequency of the switching signal (4e),
**characterized in that**
the spectrum of the laser pulse train (4a) is an optical frequency comb with a defined carrier-envelope-offset frequency $f_{CEO}$, for which applies:
$f_{CEO} = f_{PRF} / a$, wherein a is any natural number and wherein the ratio p I a likewise is a natural number.

4. System according to claim 3, **characterized in that** the control device (7) controls a high-frequency synthesizer (10) which generates the carrier signal.

5. System according to claim 4, **characterized in that** the control device (7) controls the phase and the frequency of the carrier signal generated by the high-frequency synthesizer (10).

6. System according to claim 4 or 5, **characterized in that** the control device (7) also generates a switching signal for controlling a modulator (11) provided for the modulation of the carrier signal.

**Revendications**

1. Procédé pour produire un train d'impulsions laser, avec les étapes de procédé :

- de production du train d'impulsions laser (4a) à une fréquence de répétition d'impulsions ;
- d'injection du train d'impulsions laser (4a) dans un modulateur acousto-optique, et
- de sélection d'impulsions laser individuelles du train d'impulsions laser (4a) en pilotant le modulateur acousto-optique avec des impulsions haute fréquence (4h), dans lequel les impulsions haute fréquence (4h) sont produites par modulation d'un signal porteur haute fréquence (4f) avec un signal de commutation périodique (4e), dans lequel le signal porteur (4f) est couplé avec stabilité de phase au train d'impulsions laser (4a) et dans lequel s'applique pour la fréquence $F_{HF}$ du signal porteur (4f) des impulsions haute fréquence (4h) : $f_{HF} = n/p \cdot f_{PRF}$, dans lequel n est un nombre naturel quelconque et p indique le rapport entier entre la fréquence de répétition d'impulsions et la fréquence du signal de commutation (4e),

**caractérisé en ce que**
le spectre du train d'impulsions laser (4a) est un peigne de fréquences optique avec une fréquence de décalage porteuse-enveloppe $f_{CEO}$ définie, pour laquelle s'applique :
$f_{CEO} = f_{PRF}/a$, dans lequel a un est nombre naturel et dans lequel le rapport p/a est également un nombre naturel.

**2.** Procédé selon la revendication 1, **caractérisé en ce que** la fréquence du signal porteur (4f) est un multiple entier de la fréquence de répétition d'impulsions.

**3.** Système pour produire un train d'impulsions laser, avec un laser d'impulsions (1), qui produit le train d'impulsions laser à une fréquence de répétition d'impulsions, et un modulateur acousto-optique (2), dans lequel se propagent les impulsions laser, et avec un système de commande (7), qui pilote le modulateur acousto-optique (2) pour sélectionner des impulsions laser individuelles avec des impulsions haute fréquence, dans lequel le système de commande (7) est mis au point pour produire les impulsons haute fréquence (4h) par modulation d'un signal porteur haute fréquence (4f) avec un signal de commutation périodique (4e), dans lequel le signal porteur (4f) est couplé avec stabilité de phase au train d'impulsions laser (4a), et dans lequel s'applique pour la fréquence $f_{HF}$ du signal porteur (4f) des impulsions haute fréquence (4h) :

$f_{HF} = n/p \cdot f_{PRF}$, dans lequel n est un nombre naturel quelconque et p indique le rapport entier entre la fréquence de répétition d'impulsions et la fréquence du signal de commutation (4e),

**caractérisé en ce que**
le spectre du train d'impulsions laser (4a) est un peigne de fréquences optique avec une fréquence de décalage porteuse-enveloppe définie $f_{CEO}$, pour laquelle s'applique :

$f_{CEO} = f_{PRF}/a$, dans lequel a est un nombre naturel et dans lequel le rapport p/a est également un nombre naturel.

**4.** Système selon la revendication 3, **caractérisé en ce que** le système de commande (7) plote un synthétiseur haute fréquence (10), qui produit le signal porteur.

**5.** Système selon la revendication 4, **caractérisé en ce que** le système de commande (7) commande la phase et la fréquence du signal porteur produit par le synthétiseur haute fréquence (10).

**6.** Système selon la revendication 4 ou 5, **caractérisé en ce que** le système de commande (7) produit par ailleurs un signal de commutation pour piloter un modulateur (11) prévu pour la modulation du signal porteur.

Fig. 1

Fig. 2

Fig. 3

**IN DER BESCHREIBUNG AUFGEFÜHRTE DOKUMENTE**

**In der Beschreibung aufgeführte Patentdokumente**

- WO 2013185792 A1